# EUROPÄISCHE PATENTSCHRIFT

(11) **EP 1 148 376 B1**
(45) Veröffentlichungstag und Bekanntmachung des Hinweises auf die Patenterteilung: **05.03.2003**
(21) Anmeldenummer: 01107644.5
(22) Anmeldetag: 28.03.2001
(51) Int. Cl.: G03B 37/00, F16L 55/28, E03F 7/12, F17D 5/00, H04N 5/225

(54) **Vorrichtung zur Untersuchung von Kanälen**
Pipe inspection device
Dispositif pour examiner des conduits

(30) Priorität: 07.04.2000 DE 10017352
(43) Veröffentlichungstag der Anmeldung: 24.10.2001
(73) Patentinhaber: Wolfgang Rausch GmbH & Co.KG Electronic-Maschinenbau, 88138 Weissensberg b. Lindau (DE)
(72) Erfinder: Rausch, Stefan, 88138 Weissensberg b. Lindau (DE)
(74) Vertreter: Flosdorff, Jürgen, Dr.

(56) Entgegenhaltungen:
- EP-A- 0 623 814
- DE-A- 19 546 510
- DE-C- 19 746 347
- DE-U- 29 500 127

## Beschreibung

Die Erfindung betrifft eine Vorrichtung zur Untersuchung von Kanälen, mit einem Gehäuse, in dem eine Winkelerfassungseinrichtung, ein Motor und eine Kamera angeordnet sind, wobei die Vorrichtung vorzugsweise mit einer Schiebestange versehen ist, mit dem sie in dem Kanal vorschiebbar und wieder zurückziehbar ist. Es liegt aber im Rahmen der Erfindung, daß die Vorrichtung nicht -zumeist von Hand- mittels der Schiebestange bewegt wird, sondern sie kann grundsätzlich auch mit einem Fahrwagen gekoppelt sein.

Die Fernsehkamera ist über Versorgungs- und Datenkabel mit einem entfernten Monitor verbunden, an dem die übermittelten Bilder ausgewertet werden.

Die bisher bekannten Vorrichtungen dieser Art haben den Nachteil, daß sie sich beim Vorschub durch den Kanal bzw. eine Rohrleitung meist um ihre Längsachse drehen, was insbesondere beim Passieren gekrümmter Rohrabschnitte der Fall ist, so daß die von der Kamera übermittelten Bilder entsprechend verdreht auf dem Monitor erscheinen und die Auswertung der Bilder und die räumliche Zuordnung zu dem untersuchten Kanalabschnitt erschwert sind.

Um dieses Problem zu lösen, ist in der DE 195 46 510.5 bereits eine Vorrichtung der eingangs genannten Art vorgeschlagen worden, bei der zumindest der Bildaufnehmer der Fernsehkamera, bevorzugt aber der gesamte Kameralmodul drehbar in dem Gehäuse der Vorrichtung gelagert ist und Mittel vorgesehen sind, die unter der Einwirkung der Schwerkraft den Bildaufnehmer oder den gesamten Kameramodul stets in eine waagerechte Lage ausrichten. Diese Mittel umfassen in einer in der Druckschrift beschriebenen Ausführungsform ein mit einem Gewichtskörper versehenes Potentiometer, dessen der Winkellage entsprechende Änderung des Widerstandes als Stellsignal für einen in dem Gehäuseangeordneten Motor dient, der den Bildaufnehmer oder den gesamten Kameramodul innerhalb des Gehäuses in die waagerechte Stellung zurückführt.

Bei dieser vorbekannten Vorrichtung ist das Objektiv der Fernsehkamera stets auf die Längsachse der Vorrichtung und somit des Kanals ausgerichtet, so daß es nicht möglich ist, die Kanalwände einer näheren Untersuchung zu unterziehen, beispielsweise eine Muffenverbindung von Kanalabschnitten abzukreisen.

Der vorliegenden Erfindung liegt die Aufgabe zugrunde, eine Vorrichtung der betrachteten Art so weiter zu entwickeln, daß sie eine gründlichere Untersuchung der Kanalwände bzw. Rohrleitungswände ermöglicht.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Bei der erfindungsgemäßen Vorrichtung ist das Gehäuse um seine Längsachse drehbar in einer glockenförmigen Halterung angeordnet, durch die mittig die Schiebestange hindurchführt, die vorzugsweise die Versorgungs- und Datenkabel in sich enthält. Die Kamera ist eine Kreis- und Schwenkkopfkamera, die sowohl um ihre Längsachse drehbar als auch um eine zur Längsachse senkrechten Achse schwenkbar ist, so daß die Kamera in dem Kanal auf seitliche Bereiche der Kanalwand gerichtet werden und diese um 360° abkreisen kann.

Weiter ist erfindungsgemäß vorgesehen, daß der innerhalb des Kameragehäuses angeordnete Motor in jeweils eine von zwei Betriebsarten einstellbar ist, wobei er in der einen Betriebsstellung, in der die Vorrichtung durch den Kanal geschoben oder gefahren wird (wobei die Kamera bevorzugt in Kanalrichtung nach vorne blickt) so mit der Winkelerfassungseinrichtung verbunden ist, daß er auf deren eine Verdrehung anzeigende Signale hin das Gehäuse so dreht, daß die Kamera horizontal ausgerichtet ist. Wenn die andere Betriebsart des Motors eingestellt wird, dreht dieser das Gehäuse in einer Kreisbewegung um die Längsachse, so daß die zuvor seitlich verschwenkte Kamera in Umfangsrichtung der Kanalwand bewegt wird. Die zwei Betriebsarten können durch Knopfdruck von der oberirdischen Bedienungsstation aus eingestellt werden.

Die erfindungsgemäße Vorrichtung liefert somit bei ihrer Längsbewegung durch den Kanal bzw. die Rohrleitung stets aufrechte Bilder, wobei die Vorrichtung dennoch zur eingehenden Untersuchung beispielsweise von Muffenverbindungen des Kanals geeignet ist. Da sowohl zur selbsttätigen Einstellung des Gehäuses in eine horizontale Ausrichtung der Kamera als auch zum Abkreisen der Kanalwand ein und derselbe Motor vorgesehen ist, ist der hiermit verbundene Platzbedarf in dem Gehäuse gering.

Hierzu trägt auch bei, daß nach einem weiteren wesentlichen Vorschlag der Erfindung als Winkelerfassungseinrichtung ein Neigungsschalter vorgeschlagen wird, der einen pendelartig aufgehängten Kontaktgeber hat, der -durch geeignete Dämpfungsmittel, die eine schwingende Pendelbewegung verhindern- stets in eine senkrechte Lage strebt. Rechts und links neben dem Kontaktgeber sind Schaltpunkte, die im Falle eines Kontaktes mit dem Kontaktgeber an den Motor solange ein Stellsignal mit der zugehörigen Drehrichtung abgeben, bis der Kontaktgeber wieder außer Anlage mit dem Schaltpunkt gerät.

Dieser Neigungsschalter erfordert sehr viel weniger Raum in dem Gehäuse als ein mit einem Gewichtskörper versehenes Potentiometer.

In näheren Einzelheiten wird vorgeschlagen, daß das Gehäuse über zwei axial voneinander beabstandete Kugellager auf einem mittigen Ansatz der glockenförmigen Halterung gelagert ist. Dieser Ansatz der glockenförmigen Halterung enthält zweckmäßigerweise zwischen den ringförmigen Lagerflächen einen ringförmigen radialen Vorsprung mit einem außenliegenden Zahnkranz, mit dem ein aus der Gehäusewand herausragendes Antriebszahnrad des Motors in Eingriff steht.

Die glockenförmige Halterung hat vorteilhafterweise an ihrem freien Endbereich einen radial einwärts gerichteten Randabschnitt, der in eine Umfangsnut des Gehäuses eingreift, ohne aber in Kontakt mit dieser zu geraten. Diese lose Eingriff des einwärts gebogenen Randabschnitts beeinträchtigt nicht die Drehbarkeit des Gehäuses in der glockenförmigen Halterung, verhindert aber, daß grobe Fremdstoffe in den schmalen Spalt zwischen der Innenwand der glockenförmigen Halterung und der zugewandten Außenseite des Gehäuses eindringen.

Das Gehäuse, in dem die Kamera, der Motor und der Neigungsschalter angeordnet sind, enthält eine im wesentlichen senkrecht zur Längsachse verlaufende Rückwand mit einer zentralen kreisförmigen Öffnung, wobei die Randkante dieser Wand die Lagerfläche für das in axialer Richtung innere Kugellager bildet.

Das Gehäuse enthält außerdem eine rückwärtige, im wesentlichen konische Wand, die ebenfalls in einer mittigen kreisförmigen Öffnung endet, die die zweite Lagerfläche bildet. In den Zwischenraum zwischen diesen beiden axial beabstandeten Gehäusewänden greift der radiale Ringvorsprung der glockenartigen Halterung mit dem Zahnkranz ein. Durch das labyrinthartige Ineinandergreifen der Wandabschnitte des Gehäuses und der glockenartigen Halterung und Anordnung einer Dichtung vor dem äußeren Kugellagerbereich ist unter Gewährleistung der leichten Drehbarkeit des Gehäuses dessen absolute Dichtigkeit sichergestellt. Die Montage der glockenartigen Halterung und des Gehäuses wird dadurch ermöglicht, daß die glockenartige Halterung aus zwei Teilen zusammengesetzt sind, deren Trennebene durch die Längsachse verläuft. Die beiden Glocken-Hälften sind zweckmäßigerweise miteinander verschraubt, was auch die Befestigung der Schiebestange in der glockenförmigen Halterung erleichtert.

Weitere Einzelheiten der Erfindung ergeben sich aus der nachfolgenden Beschreibung einer bevorzugten Ausführungsform der Vorrichtung sowie anhand der Zeichnung. Dabei zeigen:
- Fig. 1: einen schematischen Längsschnitt durch die Vorrichtung und
- Fig. 2: einen schematischen Querschnitt durch die Vorrichtung gemäß Fig. 1.

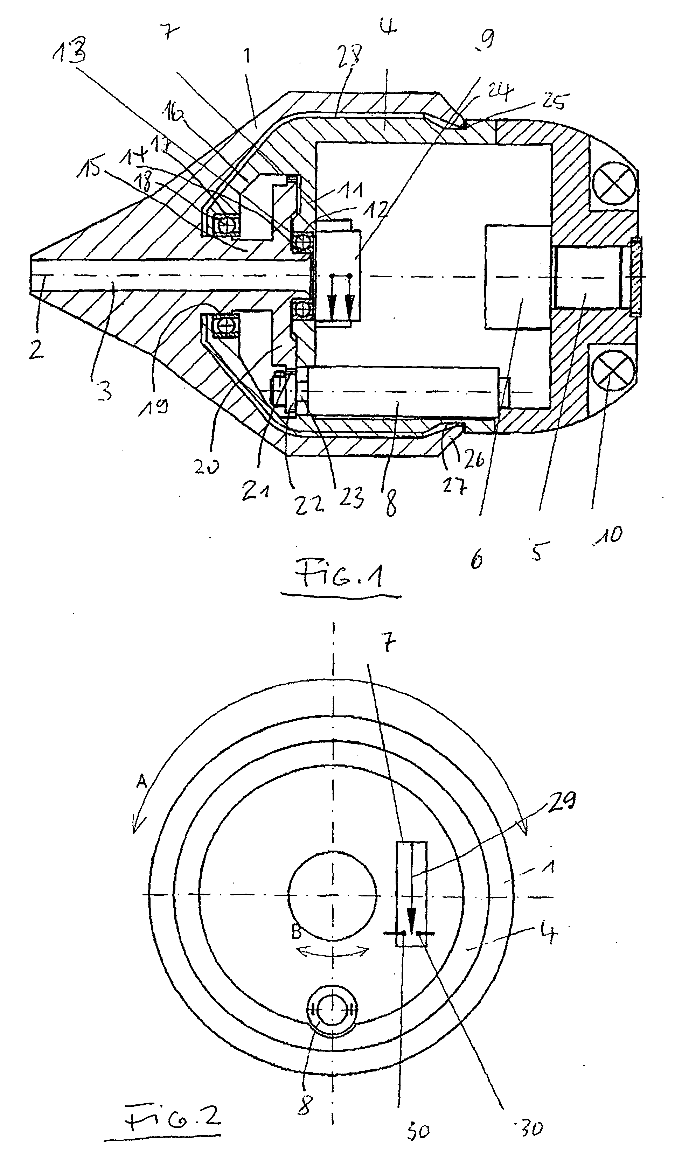

Die in den Figuren dargestellte Vorrichtung enthält eine glockenförmige Halterung 1 bzw. Schiebeglocke, die eine in Richtung der Längsachse 2 verlaufende Bohrung 3 enthält, in der eine Schiebestange befestigt werden kann, mit der die Vorrichtung in einem Kanal vorgeschoben und zurückgezogen werden kann. Die Schiebeglocke 1 umfaßt etwa die rückwärtige Hälfte eines Gehäuses 4, in dem ein Objektiv 5 sowie eine Kameramodul-Bildaufnehmereinheit 6, ein Neigungsschalter 7 und ein Elektromotor 8 angeordnet sind. Obwohl dies in Fig. 1 nicht dargestellt ist, ist die Kamera in dem Gehäuse 4 um eine zur Längsachse 2 senkrechte Achse schwenkbar angeordnet, wozu innerhalb des Gebäudes ein weiterer Motor (nicht dargestellt) angeordnet ist. Die Einzelheiten der Verschwenkbarkeit der Kamera sind für die vorliegende Erfindung nicht von Interesse.

Die (nicht dargestellten) Versorgungs- und Datenkabel verlaufen durch den Kanal 3 und können mit oder ohne Schleifring 9 an die innerhalb des Gehäuses 4 angeordneten Kontakte der Kamera 6, des Neigungsschalters 7 und des Motors 8 angeschlossen sein.

Mit dem Bezugszeichen 10 sind Leuchten bezeichnet, die in Blickrichtung der Kamera den zu untersuchenden Kanal ausleuchten.

Das Gehäuse 4 hat eine erste rückwärtige Gehäusewand 11, die senkrecht zur Längsachse 2 verläuft und in einer ringförmigen Randkante 12 endet, an der ein erstes Kugellager 13 angeordnet ist, das sich auf der gegenüberliegenden ringförmigen Randkante 14 eines mittigen Vorsprungs 15 der glockenartigen Halterung 1 abstützt.

Das Gehäuse 4 hat ferner eine im wesentlichen konisch verlaufende rückwärtige Gehäusewand 16, deren innere ringförmige Randkante 17 die Lagerfläche für ein zweites Kugellager 18 bildet, dessen innere Lagerfläche 19 des mittigen Vorsprungs 15 der glockenförmigen Halterung 1 axial von dem ersten Lager 12 beabstandet ist.

Zwischen den Gehäusewänden 11 und 16 verbleibt ein Zwischenraum, in den radial nach außen ein ringförmiger Vorsprung 20 des mittigen Ansatzes 15 hineinragt, der außen mit einer ringförmigen Verzahnung 21 versehen ist. Mit dieser Verzahnung 21 kämmt das Antriebsritzel 22 des Motors 8, dessen Antriebswelle 23 durch die Gehäusewand 11 hindurchführt.

Das Gehäuse 4 hat etwa in der Mitte seiner axialen Erstreckung eine Umfangsnut 24 mit einer vorderen senkrecht zur Längsachse 2 verlaufenden Nutwand 25. Die glockenartige Halterung 1 hat an ihrem freien Ende einen einwärts verlaufenden Randabschnitt 26, der mit geringem Spiel zu der Nutwand 25 und dem Nutboden 27 in diese ringförmige Aussparung eingreift.

Innerhalb der glockenförmigen Halterung 1 verbleibt zwischen deren Innenwand und der Außenseite des Gehäuses 4 ein gleichbleibend schmaler Spalt 28.

Fig. 2 zeigt schematisch die Anordnung des Neigungsschalters 7, der einen Kontaktgeber 29 enthält, der stets eine vertikale Lage einnehmen möchte. Der Neigungsschalter enthält außerdem zwei Schaltpunkte 30, mit denen der Kontaktgeber 29 je nach Richtung der Verdrehung der Vorrichtung in Kontakt gerät. Jedem Schaltpunkt ist ein Stellsignal für den Motor 8 mit zugehöriger Motordrehrichtung zugeordnet. Der Motor wird dabei solange betätigt, bis der Kontaktgeber 29 wieder berührungslos wird.

Als Winkelerfassungseinrichtung kann beispielsweise auch ein Beschleunigungssensor oder ein Quecksilberschalter vorgesehen sein.

## Patentansprüche

1. Vorrichtung zur Untersuchung von Kanälen oder dergleichen, mit einem Gehäuse (4), in dem eine Winkelerfassungseinrichtung (7), ein Motor (8), und eine Kamera (5, 6) angeordnet sind, und vorzugsweise mit einer Schiebestange zum Bewegen der Vorrichtung in dem Kanal,
**dadurch gekennzeichnet,**
**daß** das Gehäuse (4) um seine Längsachse (2) drehbar in einer glockenförmigen Halterung (1) sitzt, daß die Kamera (5, 6) eine Kreis- und Schwenkkopfkamera ist und daß der Motor (8) in eine von zwei Betriebsarten einstellbar ist, derart, daß er entweder auf Signale der Winkelerfassungseinrichtung (7) hin das Gehäuse (4) so dreht, daß die Kamera horizontal ausgerichtet ist, oder das Gehäuse (4) in einer Kreisbewegung zur Untersuchung der Kanalwand dreht.

2. Vorrichtung nach Anspruch 1,
**dadurch gekennzeichnet, daß** die Winkelerfassungseinrichtung ein Neigungsschalter (29, 30) ist.

3. Vorrichtung nach Anspruch 1 oder 2,
**dadurch gekennzeichnet, daß** das Gehäuse (4) über zwei axial voneinander beabstandete Kugellager (14, 18) auf ringförmigen Abschnitten der glockenartigen Halterung (1) gelagert ist.

4. Vorrichtung nach Anspruch 3,
**dadurch gekennzeichnet, daß** die glockenartige Halterung (1) zwischen den ringförmigen Lagerabschnitten einen ringförmigen radialen Vorsprung (20) mit einem äußeren Zahnkranz (21) aufweist, mit dem ein Antriebszahnrad (22) des Motors (8) kämmt.

5. Vorrichtung nach einem der Ansprüche 3 oder 4,
**dadurch gekennzeichnet, daß** die glockenartige Halterung an ihrem freien Ende einen radial einwärts gerichteten Randabschnitt (26) aufweist, der in eine Umfangsnut (24) des Gehäuses (4) eingreift.

## Claims

1. Apparatus for inspecting conduits or the like including a housing (4), in which an angle detection device (7), a motor (8) and a camera (5, 6) are arranged and preferably including a slide rod for moving the apparatus in the conduit, **characterised in that** the housing (4) is situated so as to be rotatable about its longitudinal axis (2) within a bell-shaped mounting (1), that the camera (5, 6) is an orbital and swivel head camera and that the motor (8) may be switched into one of two operational modes such that it either rotates the housing (4) in response to signals from the angle detection device (7) so that the camera is aligned horizontally or rotates the housing (4) in a circular movement to inspect the conduit wall.

2. Apparatus as claimed in Claim 1, **characterised in that** the angle detection device is an inclination switch (29, 30).

3. Apparatus as claimed in Claim 1 or 2, **characterised in that** the housing (4) is mounted on annular sections of the bell-shaped mounting (1) by means of two axially spaced ball bearings (14, 18).

4. Apparatus as claimed in Claim 3, **characterised in that** between the annular bearing sections, the bell-shaped mounting (1) has an annular radial projection (20) with an external ring gear (21), with which a drive gear wheel (22) of the motor (8) meshes.

5. Apparatus as claimed in one of Claims 3 or 4, **characterised in that** on its free end, the bell-shaped mounting has a radially inwardly directed edge section (26), which engages in a peripheral groove (24) in the housing (4).

## Revendications

1. Dispositif pour examiner des conduits ou analogues, avec un boîtier (4) dans lequel sont disposés une installation de détection d'angle (7), un moteur (8) et une caméra (5, 6), et de préférence avec une tige de poussée pour déplacer le dispositif dans le conduit, **caractérisé en ce que** le boîtier (4) se trouve d'une manière tournante autour de son axe longitudinal (2) dans un support (1) en forme de cloche, **en ce que** la caméra (5, 6) est une caméra à tête circulaire et pivotante et **en ce que** le moteur (8) peut être réglé en un de deux modes de fonctionnement de telle sorte que soit, à la suite de signaux de l'installation de détection d'angle (7), il fait tourner le boîtier (4) de façon que la caméra soit orientée horizontalement, soit qu'il fait tourner le boîtier (4) selon un mouvement circulaire pour examiner la paroi du conduit.

2. Dispositif selon la revendication 1, **caractérisé en ce que** l'installation de détection d'angle est un commutateur d'inclinaison (29, 30).

3. Dispositif selon la revendication 1 ou 2, **caractérisé en ce que** le boîtier (4) est logé par deux roulements à billes (14, 18) espacés axialement l'un de l'autre sur des tronçons circulaires du support en forme de cloche (1).

4. Dispositif selon la revendication 3, **caractérisé en ce que** le support en forme de cloche (1) présente entre les tronçons de palier annulaires une saillie radiale annulaire (20) avec une couronne dentée extérieure (21) qui engrène avec une roue dentée menante (22) du moteur (8).

5. Dispositif selon l'une des revendications 3 ou 4, **caractérisé en ce que** le support en forme de cloche présente à son extrémité libre un tronçon de bord (26) dirigé radialement vers l'intérieur qui s'engage dans une rainure périphérique (24) du boîtier (4).
